Europäisches Patentamt

European Patent Office

Office européen des brevets

(11) Publication number: **0 203 730 B1**

## EUROPEAN PATENT SPECIFICATION

(45) Date of publication of patent specification: **23.06.93**   (51) Int. Cl.5: **G02B  1/10**, G02B 1/04

(21) Application number: **86303246.2**

(22) Date of filing: **29.04.86**

(54) **Anti-reflection optical article and process for preparation thereof.**

(30) Priority: **30.04.85 JP 91010/85**

(43) Date of publication of application:
**03.12.86 Bulletin  86/49**

(45) Publication of the grant of the patent:
**23.06.93 Bulletin  93/25**

(84) Designated Contracting States:
**CH DE FR GB IT LI NL SE**

(56) References cited:
**EP-A- 0 119 331**
**GB-A- 2 064 987**

(73) Proprietor: **TORAY INDUSTRIES, INC.**
**2, Nihonbashi-Muromachi 2-chome Chuo-ku**
**Tokyo 103(JP)**

(72) Inventor: **Taniguchi, Takashi**
**1300-134, Oaza Minamizakura**
**Yasu-cho Yasu-gun Shiga(JP)**

(74) Representative: **Ellis, John Clifford Holgate et al**
**MEWBURN ELLIS & CO. 2/3 Cursitor Street**
**London EC4A 1BO (GB)**

EP 0 203 730 B1

## Description

The present invention relates to an anti-reflection optical article having excellent stain resistance, scratch resistance and processability and a process for the preparation of this optical article. More particularly, the present invention relates to an optical article which is valuably used as optical elements, for example, optical lenses such as spectacle lenses and camera lenses, and filters to be used as front plates of CRT (cathode ray tube) and Braun tubes to be used for CRT.

When a thing is seen through a transparent material, if reflected rays are strong and a reflected image is clear, seeing is disturbed, and reflected images such as so-called ghosts or flares are formed to give an unpleasant feel to eyes. Moreover, in case of a looking glass, the content cannot be clearly seen because of rays reflected from the glass surface.

As means for preventing reflection, there has been adopted a method in which a substrate is covered with a material having a refractive index different from that of the substrate. It is known that in order to increase the reflection-preventing effect in this method, selection of the thickness of the substance covering the substrate is important. Thus, it is known that in case of, for example, a single-layer coating, adjustment of the optical thickness of the substance having a refractive index lower than that of the substrate to 1/4 of the wavelength of the objective light or an odd number multiple thereof gives a minimum reflectance, that is, a maximum transmission.

The optical thickness referred to herein is given by a product of the refractive index of the coating-forming material and the thickness of the coating. An anti-reflection layer having a multi-layer structure can be formed, and several proposals have been made in connection with selection of the thickness of the coating layer [A. Vasicek, "Optics of Thin Films", 159-283, North-Holland Publishing Company, Amsterdam (1960)].

U.S. Patent No. 4,361,598 and U.S. Patent Application Serial No. 474,741 disclose a process in which a multi-layer anti-reflection film satisfying the above-mentioned optical thickness condition is formed by using a liquid composition.

In an anti-reflection film formed by the vacuum deposition method, the film-forming material is composed mainly of an inorganic oxide or inorganic halide, and essentially, the anti-reflection film has a high surface hardness, but it is readily stained with hand dirt, finger marks, sweat, hair liquid, hair spray and the like and it is difficult to remove these stains. Furthermore, since the surface slip is poor, thick scratches are readily formed. In addition, since the water wettability is large, if rain drops or water splashes adhere, water broadly spreads, and in case of a spectacle lens or the like, an object is seen distorted over a broad area.

Patent Application GB-A-2 064 987 describes an enhanced anti-reflective effect produced by treating with an activated gas a surface layer containing particles of an inorganic substance, such as silicon or aluminium oxide. This may be followed, if desired, by a protective coating layer.

In anti-reflection films disclosed in Japanese Unexamined Patent Publications No. 58-46301, No. 59-49501 and No. 59-50401, in order to impart a high surface hardness, it is necessary that an inorganic substance represented by fine particles of silica should be incorporated in an amount of at least 30% by weight in a topcoat layer. However, an anti-reflection film formed from such a film composition is poor in the surface slip and is readily scratched by rubbing with a cloth or the like.

Various surface treating agents have been proposed and marketed as means for eliminating these drawbacks, but since each of them is soluble in water or solvents, the function given is a temporary one and the durability is poor.

We made research with a view to solving the foregoing problems involved in the conventional techniques, and as the result, we have arrived at the present invention described hereinafter.

It is a primary object of the present invention to provide an anti-reflection optical article excellent in stain resistance, scratch resistance and processability.

Another object of the present invention is to provide a process in which such an optical article is prepared without degradation of the appearance characteristics owing to interference color unevenness.

In accordance with one aspect of the present invention, there is provided an anti-reflection optical article carrying, formed thereon, a single-layer or multi-layer anti-reflection film. The outermost layer of this film (which will, of course be the only layer in the case of a single-layer film) is a layer of silicon dioxide deposited by a PVD (physical vapour deposition) method. On the surface of the anti-reflection film there is a coating of an organic substance-containing curing substance. The surface reflectance of the optical article is lower than 3% and the stationary contact angle to water is at least 60°.

In accordance with another aspect of the present invention, there is provided a process for the preparation of anti-reflection optical articles, which comprises forming on the surface of a substrate an

EP 0 203 730 B1

inorganic single-layer or multi-layer anti-reflection film, of which the outermost layer is silicon dioxide deposited by a PVD method, coating a curable organic substance-containing substance consisting of a water-repellant liquid composition on the surface of the anti-reflection film, and curing the coating.

In the present invention, the single-layer or multi-layer anti-reflection film composed of an inorganic substance is formed from a composition comprising at least 30% by weight of an inorganic oxide, an inorganic halide or a composite thereof. As means for forming this film, there can be mentioned various PVD methods such as a vacuum deposition method, an ion plating method and a sputtering method, and coating methods using a liquid composition capable of forming a film comprising at least 30% by weight of an inorganic substance after the coating, such as a spin coating method, a dip coating method, a curtain flow coating method, a roll coating method, a spray coating method or a cast coating method. It is however an essential feature of the invention that the outermost layer of the anti-reflection film shall be silicon dioxide formed by a PVD method.

As the inorganic substance preferably used for the PVD method, there can be mentioned $SiO_2$ , $MgF_2$ , $AlF_3$ , $BaF_2$ , $CaF_2$ , $LaF_3$ , $LiF$, $Na_3AlF_6$ , $Na_5Al_3F_{14}$ , $NaF$ and $SrF_2$.

As the inorganic substance preferably used for the coating method using a liquid composition, there can be mentioned a hydrolysis product of a silicate represented by the following general formula [I]:

$$Si(OR)_4 \quad [I]$$

wherein R stands for an alkyl group, an acyl group or an alkoxyalkyl group,
and finely divided silica, especially colloidally dispersed silica sol.

It is indispensable that the surface layer film formed by the PVD method or the liquid composition-coating method should comprise at least 30% by weight of the inorganic substance. If the content of the inorganic substance is lower than 30% by weight, no sufficient surface hardness can be obtained and prominent improvements of the stain resistance and scratch resistance, intended in the present invention, cannot be attained.

The finely divided silica-containing film obtained by using the above-mentioned colloidally dispersed silica sol contains finely divided silica having an average particle size of 1 to 200 nm, preferably 5 to 150 nm. As the finely divided silica, there can be mentioned a sol of silica colloidally dispersed in a hydrophilic solution such as water or an alcohol, and hydrophobic finely divided silica obtained by the esterification of the surfaces of particles of the above-mentioned silica sol with a long-chain alcohol. The content of the finely divided silica in the film should be determined according to the object and use, but in order to improve the hardness, enhance the adhesion to the substrate and prevent formation of cracks, it is preferred that the content of the finely divided silica be 2 to 80% by weight, especially 5 to 70% by weight. If the average particle size is smaller than 1 nm, the stability of the particles is poor and products having a uniform quality cannot be obtained. If the average particle size exceeds 200 nm, the transparency of the film is low and products having a good appearance cannot be obtained.

As the component (hereinafter referred to as "vehicle component") other than the finely divided silica, any material can be used if the transparency is not degraded. For example, there may be used polyvinyl acetate, a saponification product thereof, an acrylic polymer, a cellulose compound, a melamine resin, an epoxy resin, a polyorganosiloxane resin, a polyvinyl butyral resin and a urethane resin. These vehicles may be used singly or in the form of mixtures of two or more of them. Instead of thermoplastic vehicles, there may be used crosslinked products. The use of crosslinked products is effective for improving such properties as heat resistance, hot water resistance and chemical resistance. In order to improve the surface hardness, a polyorganosiloxane resin is preferably used among the above-mentioned vehicles. As a typical instance of the composition forming a polyorganosiloxane resin, there can be mentioned an organic silicon compound represented by the following general formula [II] and/or a hydrolysis product thereof.

$$R^1_a R^2_b Si(OR^3)_{4-a-b} \quad [II]$$

wherein $R^1$ and $R^2$ each stand for an alkyl group, an alkenyl group, an aryl group or a hydrocarbon group having a halogen group, an epoxy group, a glycidoxy group, an amino group, a mercapto group, a methacryloxy group or a cyano group, $R^3$ stands for an alkyl group having 1 to 8 carbon atoms, an alkoxyalkyl group, an acyl group or a phenyl group, and a and b are 0 or 1 and (a + b) is 1 or 2.

As typical instances of the organic silicon compound, there can be mentioned trialkoxysilanes, triacyloxysilanes and triphenoxysilanes such as methyltrimethoxysilane, methyltriethoxysilane, methyltrimethoxyethoxysilane, methyltriacetoxysilane, methyltributoxysilane, ethyltrimethoxysilane, ethyltriethoxysilane, vinyltrimethoxysilane, vinyltriethoxysilane, vinyltriacetoxysilane, vinyltrimethoxyethoxysilane, phenyl-

3

trimethoxysilane, phenyltriethoxysilane, phenyltriacetoxysilane, $\gamma$-chloropropyltrimethoxysilane, $\gamma$-chloropropyltriethoxysilane, $\gamma$-chloropropyltriacetoxysilane, 3,3,3-trifluoropropyltrimethoxysilane, $\gamma$-methacryloxypropyltrimethoxysilane, $\gamma$-aminopropyltrimethoxysilane, $\gamma$-mercaptopropyltrimethoxysilane, $\gamma$-mercaptopropyltriethoxysilane, N-$\beta$-(aminoethyl)-$\gamma$-aminopropyltrimethoxysilane, $\beta$-cyanoethyltriethoxysilane, methyltriphenoxysilane, chloromethyltrimethoxysilane, chloromethyltriethoxysilane, glycidoxymethyltrimethoxysilane, glycidoxymethyltriethoxysilane, $\alpha$-glycidoxyethyltrimethoxysilane, $\alpha$-glycidoxyethyltriethoxysilane, $\beta$-glycidoxyethyltrimethoxysilane, $\beta$-glycidoxyethyltriethoxysilane, $\alpha$-glycidoxypropyltrimethoxysilane, $\alpha$-glycidoxypropyltriethoxysilane, $\beta$-glycidoxypropyltrimethoxysilane, $\beta$-glycidoxypropyltriethoxysilane, $\gamma$-glycidoxypropyltrimethoxysilane, $\gamma$-glycidoxypropyltriethoxysilane, $\gamma$-glycidoxypropyltripropoxysilane, $\gamma$-glycidoxypropyltributoxysilane, $\gamma$-glycidoxypropyltrimethoxyethoxysilane, $\gamma$-glycidoxypropyltriphenoxysilane, $\alpha$-glycidoxybutyltrimethoxysilane, $\alpha$-glycidoxybutyltriethoxysilane, $\beta$-glycidoxybutyltrimethoxysilane, $\beta$-glycidoxybutyltriethoxysilane, $\gamma$-glycidoxybutyltrimethoxysilane, $\gamma$-glycidoxybutyltriethoxysilane, $\delta$-glycidoxybutyltrimethoxysilane, $\delta$-glycidoxybutyltriethoxysilane, (3,4-epoxycyclohexyl)-methyltrimethoxysilane, (3,4-epoxycyclohexyl)methyltriethoxysilane, $\beta$-(3,4-epoxycyclohexyl)-ethyltrimethoxysilane, $\beta$-(3,4-epoxycyclohexyl)ethyltriethoxysilane, $\beta$-(3,4-epoxycyclohexyl)-ethyltripropoxysilane, $\beta$-(3,4-epoxycyclohexyl)ethyltributoxysilane, $\beta$-(3,4-epoxycyclohexyl)-ethyltrimethoxyethoxysilane, $\beta$-(3,4-epoxycyclohexyl)ethyltriphenoxysilane, $\gamma$-(3,4-epoxycyclohexyl)-propyltrimethoxysilane, $\gamma$-(3,4-epoxycyclohexyl)propyltriethoxysilane, $\delta$-(3,4-epoxycyclohexyl)-butyltrimethoxysilane, $\delta$-(3,4-epoxycyclohexyl)butyltriethoxysilane and hydrolysis products thereof, and dialkoxysilanes, diphenoxysilanes and diacyloxysilanes such as dimethyldimethoxysilane, phenylmethyldimethoxysilane, dimethyldiethoxysilane, phenylmethyldiethoxysilane, $\gamma$-chloropropylmethyldimethoxysilane, $\gamma$-chloropropylmethyldiethoxysilane, dimethyldiacetoxysilane, $\gamma$-methacryloxypropylmethyldimethoxysilane, $\gamma$-methacryloxypropylmethyldiethoxysilane, $\gamma$-mercaptopropylmethyldimethoxysilane, $\gamma$-mercaptopropylmethyldiethoxysilane, $\gamma$-aminopropylmethyldimethoxysilane, $\gamma$-aminopropylmethyldiethoxysilane, methylvinyldimethoxysilane, methylvinyldiethoxysilane, glycidoxymethylmethyldimethoxysilane, glycidoxymethylmethyldiethoxysilane, $\alpha$-glycidoxyethylmethyldimethoxysilane, $\alpha$-glycidoxyethylmethyldiethoxysilane, $\beta$-glycidoxyethylmethyldimethoxysilane, $\beta$-glycidoxyethylmethyldiethoxysilane, $\alpha$-glycidoxypropylmethyldimethoxysilane, $\alpha$-glycidoxypropylmethyldiethoxysilane, $\beta$-glycidoxypropylmethyldimethoxysilane, $\beta$-glycidoxypropylmethyldiethoxysilane, $\gamma$-glycidoxypropylmethyldimethoxysilane, $\gamma$-glycidoxypropylmethyldiethoxysilane, $\gamma$-glycidoxypropylmethyldipropoxysilane, $\gamma$-glycidoxypropylmethyldibutoxysilane, $\gamma$-glycidoxypropylmethyldimethoxyethoxysilane, $\gamma$-glycidoxypropylmethyldiphenoxysilane, $\gamma$-glycidoxypropylethyldimethoxysilane, $\gamma$-glycidoxypropylethyldiethoxysilane, $\gamma$-glycidoxypropylethyldipropoxysilane, $\gamma$-glycidoxypropylvinyldimethoxysilane, $\gamma$-glycidoxypropylvinyldiethoxysilane, $\gamma$-glycidoxypropylphenyldimethoxysilane, $\gamma$-glycidoxypropylphenyldiethoxysilane and hydrolysis products thereof.

These organic silicon compounds may be used singly or in the form of mixture of two or more of them. In order to impart dyeability, it is preferred that an organic silicon compound containing an epoxy group or glycidoxy group be used.

In order to improve such properties as weatherability and sweat resistance and enhance the anti-reflection effect by reduction of the refractive index of the coating film, it is preferable to use an organic silicon compound having a methyl group, a $\gamma$-chloropropyl group or a vinyl group.

In order to lower the curing temperature and promote the advance of curing, it is preferred that these organic silicon compounds be used in the hydrolyzed state.

The hydrolysis product may be prepared by adding pure water or an acidic aqueous solution such as hydrochloric acid, acetic acid or sulfuric acid to the organic silane compound and stirring the mixture. The degree of the hydrolysis can be easily controlled by adjusting the amount added to pure water or the acidic aqueous solution. In order to promote curing, it is especially preferred that pure water or the acidic aqueous solution be added in an amount of 1 to 3 moles per mole of the group $OR^3$ in the general formula [II].

Since an alcohol or the like is formed by the hydrolysis, it is possible to perform the hydrolysis in the absence of a solvent, but in order to perform the hydrolysis uniformly, it is possible to carry out the hydrolysis after the organic silicon compound is mixed with a solvent. An appropriate amount of an alcohol or the like formed by the hydrolysis may be removed by heating and/or under a reduced pressure according to need, and an appropriate solvent may be added after the removal of the alcohol or the like. As the solvent, there can be mentioned alcohols, esters, ethers, ketones, halogenated hydrocarbon and aromatic hydrocarbons such as toluene and xylene. A mixed solvent of two or more of these solvents may be used according to need. In order to promote the hydrolysis reaction and advance precondensation or other reaction, it is possible to elevate the temperature above room temperature. Needless to say, the hydrolysis temperature may be reduced below room temperature so as to control precondensation.

In order to modify the organic polysiloxane resin, for example, in order to improve the adhesion to a plastic substrate and improve the dyeability of the coating film, it is preferred that an epoxy resin be added.

The thickness of the surface film should be determined depending on the required properties other than the anti-reflection effect, but in order to attain a highest anti-reflection effect, it is preferred that the optical thickness of the surface film be 1/4 of the wavelength of the objective light or an odd number multiple thereof. In this case, a minimum reflectance, that is, a maximum transmission, can be given.

Incidentally, the optical thickness is given by a product of the refractive index of the film-forming material and the thickness of the film.

The lower layer located below the above-mentioned surface film is not particularly critical. More specifically, the surface film may be formed directly on the substrate, but in order to enhance the anti-reflection effect, it is preferred that at least one layer having a refractive index higher than that of the surface film be coated on the substrate. Several proposals as mentioned have been made on the thickness and refractive index of the surface film in such multi-layer anti-reflection films.

In order to obtain an optical article having an electromagnetic wave-shielding property and an antistatic effect as well as a anti-reflection effect, it is preferred that at least one layer of the multi-layer film be transparent and electroconductive. As the transparent electroconductive layer, there can be mentioned films of metals such as Au, Ag and Al, and films of inorganic oxides such as tin oxide, indium oxide and a mixture thereof. An inorganic oxide film of the latter type is preferable because the absorption in the visible ray range is very small.

According to the present invention, a layer of an organic substance-containing curing substance is formed on the surface of the single-layer or multi-layer anti-reflection film having the surface layer composed mainly of an inorganic substance. The organic substance-containing curing substance referred to herein is a substance containing a three-dimensionally crosslinkable substance. It is indispensable that the surface reflectance of the optical article after formation of the curing coating should be lower than 3% and the stationary contact angle to water should be at least 60°. The surface reflectance referred to herein means the total ray reflectance on the curing coating-formed surface. In case of an optical article having an anti-reflection film and an organic substance-containing curing coating on each of both the surfaces, the reflectance on both the surfaces should be lower than 6%. If the surface reflectance of the optical article after formation of the curing coating is not lower than 3%, attainment of the anti-reflection effect cannot be expected. In the case where the optical article is colorless and transparent, 1/2 of the value obtained by subtracting the total ray transmission from 100% may be regarded as the reflectance of one surface.

If the surface reflectance is not lower than 3%, in case of a spectacle lens, a reflected image such as ghost or flare is produced to give an unpleasant feeling to eyes, and in case of a filter for looking glass, CRT, the content or displayed figure is rendered obscure by rays reflected on the surface.

Furthermore, it is indispensable that in the optical article after formation of the curing coating, the stationary contact angle should be at least 60°. The stationary contact angle referred to herein is one determined according to the liquid drop method in which a water drop having a diameter smaller than 2 mm is formed on the optical article and the contact angle is measured. If the stationary contact angle to water is smaller than 60°, the effect of improving the stain resistance is insufficient and the surface slip is degraded. When it is desirable to improve the water-repellent effect, it is preferred that the stationary contact angle be at least 75°.

The organic substance-containing curing substance is not particularly critical, so far as the above-mentioned requirements of the surface reflectance and stationary contact angle to water are satisfied. However, room temperature-curing type or low temperature-curing type organic polysiloxane polymers are preferred, and a polydimethylsiloxane polymer is especially preferred because the stationary contact angle can be increased when this polymer is used. As the curing polysiloxane, there can be mentioned compositions formed by mixing polyalkyl-, polyalkenyl- and polyarylsiloxanes such as polydimethylsiloxane, polymethylphenylsiloxane and polymethylvinylsiloxane with various crosslinking agents, for example, tetra-functional silanes such as tetraacetoxysilane, tetraalkoxysilane, tetraethylmethylketooximesilane and tetraisopropenylsilane or trifunctional silanes such as alkenyltriacetoxysilane, triketooximesilane and triisopropenylsilane, and products formed by reacting such compositions in advance. As another polysiloxane having a curing property, there can be mentioned a cured product obtained by reacting a polysiloxane having an Si-H linkage with a compound having an unsaturated group in the presence of a platinum compound. As still another effective example, there can be mentioned a fluorine-containing mixture, especially a polymer containing a perfluoro group-containing (meth)acrylate or a copolymer containing this (meth)acrylate and other monomer. A functional group is introduced into this polymer so as to effect crosslinking and curing. For example, a copolymer formed by introducing a hydroxyl group-containing hydroxyl (meth)acrylate or a carboxyl group-containing monomer such as (meth)acrylic acid into the above-mentioned polymer may be used. Moreover, a copolymer with a monomer having a double bond differing in the reactivity, such as allyl (meth)acrylate, can be mentioned as the crosslinkable polymer. The polymerization state of the copolymer is not limited to the above-mentioned polymerization state, but random copolymerization and block copolymerization can be adopted. In order to improve the water repellancy and the adhesion to the material to be coated, it is preferable to use a block copolymer.

In the anti-reflection film of the present invention, in order to obtain a sufficient surface hardness, it is preferred that a single-layer or multi-layer film composed mainly of silicon dioxide be formed as the outermost layer.

In the single-layer or multi-layer anti-reflection film having a surface layer film composed substantially of silicon dioxide, it is preferred that the surface be coated with a substance composed of a silanol-terminated organic polysiloxane. As silanol-terminated organic polysiloxane, there can be mentioned terminal silanol group-containing polyalkyl-, polyalkenyl- and polyarylsiloxanes such as polydimethylsiloxane, polymethylphenylsiloxane and polymethylvinylsiloxane. The molecular weight of the silanol-terminated organic polysiloxane is not particularly critical, but in view of the stability and handling property, it is preferred that a silanol-terminated organic polysiloxane having a number average molecular weight of 1,000 to 1,000,000, especially 2,000 to 500,000, be used. A product having terminal silanol group may be obtained by hydrolyzing a monomer such as dimethyldichlorosilane, dimethyldialkoxysilane or dimethyldiacetoxysilane. Of course, a silanol-terminated organic polysiloxane may be obtained by further advancing the condensation reaction.

In order to promote curing or render the above-mentioned curable, a curing agent or a crosslinking agent may be added to the above-mentioned composition. For example, there may be used a silicone resin-curing agent, a silane coupling agent, a metal alkoxide, a metal chelate compound, an isocyanate compound, a melamine resin, a polyfunctional acrylic resin and a urea resin.

The method for curing the organic substance-containing substance should be determined according to the anti-reflection substrate and the kind of the substance used. Ordinarily, curing is effected by a heat treatment at a temperature higher than room temperature and lower than 250°C or by irradiation with radiant rays such as ultraviolet rays, electron beams or $\gamma$-rays while utilizing a curable functional group such as a double bond in the polymer or oligomer.

In the case where the organic substance-containing curing substance is not cured, the coating is readily dropped from the optical article at the washing step or by contact with a chemical, and a product having a good durability cannot be obtained.

The thickness of the coating composed of the organic substance-containing curing substance is not particularly critical, but in view of the relation between the anti-reflection effect and the stationary contact angle to water, it is preferred that the thickness of the coating be 0.0005 to 0.5 $\mu$m, especially 0.001 to 0.3 $\mu$m.

A coating method adopted for the ordinary coating operation may be adopted, but in view of the uniformity of the anti-reflection effect and the control of the reflection interference color, spin coating, dip coating and curtain flow coating are preferably adopted. In view of the operation efficiency, it is most preferable to adopt a method in which a material such as paper or cloth is impregnated with the coating liquid and flow coating is effected.

The organic substance-containing curing substance is ordinarily diluted with a volatile solvent and is then coated. The kind of the solvent is not particularly critical, but an appropriate solvent is selected while taking the stability of the composition, the wettability with the inorganic substance and the volatility into consideration. A mixture of two or more of solvents may be used.

In view of the uniform coating property, it is preferred that a composition described below be used for the organic polysiloxane polymer, that is, a coating composition consisting of a homogeneous solution comprising (A) a curable organic silicon compound, (B) a solvent capable of dissolving the organic silicon compound therein and (C) a solvent incapable of dissolving the organic silicon compound therein. Any of curable organic silicon compounds can be used as the component (A), and many organic silicon compounds as exemplified hereinbefore may be used. The components (B) and (C) are compounds customarily used as solvents, and the combined use of the component (B) capable of dissolving the organic silicon compound therein and the component (C) incapable of dissolving the organic silicon compound therein is preferred in view of the uniform coating property.

The content of the component (A) in the coating composition used in the present invention can be changed according to the intended use, the coating method and the coating conditions. In view of the fact that only the surface characteristics are improved, a content of 0.0001 to 5.0% by weight is especially preferred for the component (A).

The kinds of the components (B) and (C) should be determined according to the organic silicon compound used. As the solvent (B) in which the organic silicon compound is soluble, there can be mentioned esters such as butyl acetate, ethers such as diethylene glycol dimethyl ether, aliphatic hydrocarbons such as hexane and Isoper E, aromatic hydrocarbons such as benzene, toluene and xylene, halogenated hydrocarbons such as trichloroethylene, and ketones such as methylisobutylketone.

As the solvent (C) in which the organic silicon compound is insoluble, there can be mentioned esters such as ethyl acetoacetate, alcohols such as methylcellosolve, diacetone alcohol and benzyl alcohol, cyclic ethers such as dioxane, and cyclic ketones such as cyclohexanone. As the components (B) and (C), there may be used mixed solvents comprising at least two solvents.

The mixing ratio between the components (B) and (C) should be determined depending on the kind of the component (A), the substance to be coated and the coating conditions, but in order to reduce the influence of the coating atmosphere and increase the productivity, it is preferred that the component (B)-/component (C) weight ratio be from 95/5 to 40/60, especially from 92.5/7.5 to 45/55.

The coating composition of the present invention comprising the above-mentioned components (A), (B) and (C) should be a homogeneous solution. If the coating composition is heterogeneous, the cured organic silicon coating film is uneven and the appearance and performance characteristics are degraded.

Curing agents and crosslinking agents as mentioned hereinbefore may be added to the coating composition so as to promote curing or render the composition curable.

Substances having no reactivity may be added to the curing substance of the present invention, so far as transparency, durability and other properties are not drastically degraded. For example, a surface active agent may be added to improve the flow characteristic, and a dimethylsiloxane/alkylene oxide block or graft copolymer or a fluorine type surface active agent is especially effective.

Any optical articles may be used as the substrate in the present invention, but in view of the adaptability to the liquid coating operation, a glass substrate or plastic material is especially preferred.

As the plastic material, there are preferably used homopolymers and copolymers of methyl methacrylate, polycarbonates, diethylene glycol bisallyl carbonate polymer (CR-39), polyesters, especially polyethylene terephthalate, unsaturated polyesters, acrylonitrilestyrene copolymers, vinyl chloride resins, polyurethane resins and epoxy resins.

Glass can also be preferably used. Moreover, the present invention may be applied to an anti-reflection film comprising as the substrate a glass or plastic material, as mentioned above, coated with a coating material such as a hard coat. In the anti-reflection optical article of the present invention, such properties as adhesion, hardness, chemical resistance, durability and dyeability can be improved by the inorganic substance constituting the anti-reflection film as the lower layer.

A known surface hardness-increasing coating for a plastic material can be used so as to improve the hardness (see the specifications of U.S. Patent No. 3,986,997 and U.S. Patent No. 4,211,823). Moreover, an oxide of a metal such as titanium, aluminum, silicon or tin may be coated or an acrylic crosslinked product obtained from (meth)acrylic acid and pentaerythritol may be coated.

When the organic substance-containing curing substance is coated according to the present invention, the surface of the anti-reflection film composed substantially of the inorganic substance is preferably cleaned by removal of stains by a surface active agent, degreasing with an organic solvent or vapor washing with Freon. Various pre-treatments are effective for improving the adhesion and durability, and an activating gas treatment and a chemical treatment with an acid or alkali are especially preferred.

The anti-reflection optical article obtained according to the present invention is hardly stained as compared with the ordinary anti-reflection film, and the stain is inconspicuous. Moreover, stains can be removed very easily. Furthermore, since the surface slip is good, the surface is hardly scratched. Since these excellent properties are durable, the anti-reflection optical article of the present invention can be preferably used as optical lenses such as spectacle lenses, camera lenses and binocular lenses, various displays, especially CRT displays, and front face plates thereof.

The anti-reflection multi-layer film of the present invention may be subjected to the surface analysis by ESCA (X-ray photoelectric spectrophotometric method). According to this method, the surface of a sample placed in high vacuum is irradiated with X-rays, and photoelectrons going out from the surface are detected by energy division by an analyzer. Typical measurement conditions are as follows.

Measurement apparatus:

ESCA 750 supplied by Shimazu Seisakusho

Exciting X-rays:

Mg-K$\alpha$ rays (1253.6 eV)

Output power of X-rays:

8 KV, 20 mA

7

Temperature:

20°C

Vacuum degree:

below 5 x 10⁻⁵ Pa

Pretreatment of sample:

not effected

Correction of energy:

the value of the bond energy of the $C_{ls}$ main peak is corrected to 284.6 eV

The single-layer or multi-layer anti-reflection film of the inorganic substance, which is located below the coating of the organic substance-containing curing substance, may be analyzed by Auger electron spectroscopy. According to this method, the surface of a sample placed in high vacuum is irradiated with electron beams, and Auger electrons going out from the surface are analyzed by energy division by an analyzer. Typical measurement conditions are as follows.

Measurement apparatus:

JAMP-105 supplied by Nippon Denshi K.K.

Vacuum degree at analysis of top surface:

1 x 10⁻⁷ Pa

Vacuum degree at analysis in depth direction:

6 x 10⁻⁶ Pa (Ar atmosphere)

Sampling:

sample is fixed to a sample stand by pressing the sample end by a steel plate

Acceleration voltage:

3.0 KV

Sample current:

1 x 10⁻⁸ A

Beam diameter:

1 μm

Slit:

No.5

Sample inclination angle:

40 to 70°

Acceleration voltage for Ar ion etching:

3.0 KV

Sample current for Ar ion etching:

3 x 10⁻⁷ A

Ar etching speed:

200Å/min (in case of $SiO_2$)

The present invention will now be described in detail with reference to the following examples that by no means limit the scope of the invention. Incidentally, in the examples, all of "parts" are by weight.

Example 1 and Comparative Example 1

(1) Preparation of Coating Composition

A beaker was charged with 128.7 parts of γ-glycidoxypropylmethyldiethoxysilane, and 18.7 parts of a 0.05N aqueous solution of hydrochloric acid was dropped little by little while maintaining the liquid temperature at 10°C to effect hydrolysis. After completion of the dropwise addition, 69.3 parts of γ-chloropropyltrimethoxysilane was added to the reaction liquid and 18.9 parts of a 0.01N aqueous solution of hydrochloric acid was dropped little by little while cooling the liquid to 10°C to obtain a hydrolyzed silane. After completion of the dropwise addition, 451.6 parts of silica sol dispersed in methanol (solid content = 30%), 34.4 parts of diethylene glycol dimethyl ether, 263.8 parts of methyl alcohol, 1.5 parts of a silicone type surface active agent and 13.5 parts of aluminum acetylacetonate were added to the reaction liquid and the mixture was sufficiently stirred to obtain a coating composition.

(2) Preparation of Coated Lens

A lens was dipped in an aqueous solution of sodium hydroxide, washed sufficiently with water and dried, and both the surfaces of the lens were dip-coated with the coating composition prepared in (1) above at a pull-up speed of 10 cm/min and the lens was heated and dried at 90°C for 4 hours to obtain a coated lens.

(3) Preparation of Anti-Reflection Film

On both the surfaces of the lens, $ZrO_2/TiO_2/Y_2O_3$ , $Ta_2O_5$ and $SiO_2$ were formed on the resin coating formed in (2) above in this order according to the vacuum deposition method so that the optical film thickness was $\lambda/4$ ($\lambda$ = 540 nm).

The anti-reflection plastic molded article had a green reflection interference color, and the total ray transmission was 98.12%.

(4) Preparation of Organic Substance-Containing Curing Coating Composition

In 10 parts of Isoper E, which is a hydrocarbon solvent, was dissolved 10 parts of dimethylpolysiloxane (having a number average molecular weight of 26,000) having silanol groups on both the ends, and 1 part of ethyltriacetoxysilane and 0.05 part of dibutyltin diacetate were added to the solution. The mixture was allowed to stand still at room temperature a whole day and night. Then, 1080 parts of toluene was added to the mixture to form a homogeneous solution. The solution was filtered and purified to obtain a coating composition.

(5) Coating and Curing

The surface of the anti-reflection film obtained in (3) above was dip-coated with the coating composition obtained in (4) above at a pull-up speed of 2 cm/min. The coated film was allowed to stand still at room temperature a whole day and night, whereby curing was effected and an anti-reflection optical article was obtained.

(6) Evaluation of Properties

The properties of the obtained optical article were evaluated according to the following methods. For comparison, the optical article not coated with the organic substance-containing curing substance was similarly tested. The obtained results are shown in Table 1.

(a) Stationary Contact Angle to Water

By using a contact angle meter (Model CA-D supplied by Kyowa Kagaku K.K.), a water drop having a diameter of 1.5 mm was prepared on the top end of the needle and the top point of the needle was brought into contact with the topmost part of the convex surface of a lens to form a liquid drop. The angle between the liquid drop and the surface was measured and designated as the stationary contact angle.

(b) Appearance

The reflection interference color and its uniformity and opacity were observed with the naked eye.

(c) Anti-Reflection Effect

The total ray transmission (Ti) was measured and the surface reflectance of one surface was calculated according to the following formula, and the anti-reflection effect was evaluated:

Anti-reflection effect (surface reflectance) = (100 - Ti)/2

If the surface reflectance of one surface was lower than 3%, ghost or flare was not substantially observed, and no practical trouble was caused.

(d) Stain Resistance Test

On the concave surface of the lens, 5 ml of city water was dropped, and the lens was allowed to stand still in a room temperature atmosphere for 48 hours. The lens surface was wiped by a cloth and the state of the residual fur was examined. When the fur could be removed, it was judged that the stain resistance was good, and if the fur could not be removed, it was judged that the stain resistance was bad.

(e) Surface Slip

The surface of the lens was scratched by the finger, and the state of catching of the finger on the lens surface was checked and the surface slip was evaluated according to the following scale.

o: not caught at all

△: caught by strong scratching

x: caught even by weak scratching

(f) Durability Test

The surface was rubbed 20 times with paper impregnated with acetone, and the above-mentioned stain resistance test was carried out. When the fur could be removed, it was judged that the durability was good, and when the fur could not be removed, it was judged that the durability was bad.

Comparative Example 2

The procedures of Example 1 were repeated in the same manner except that a terminal-blocked uncuring dimethylpolysiloxane (having a number average molecular weight of 26,000) was used for formation of the coating composition in (4) of Example 1. The durability was bad. Accordingly, it was found that if an uncuring substance is used, the durability is poor.

Comparative Example 3

The procedures of Example 1 were repeated in the same manner except that the optical article having the anti-reflection film was changed to the following article and the article not coated with coating composition was tested. The obtained results are shown in Table 1.

(1) Preparation of Anti-Reflection Film

A plano lens of crown glass was coated with magnesium fluoride by the vacuum deposition method to obtain a lens having an anti-reflection film.

Example 2

The procedures of Example 1 were repeated in the same manner except that the organic substance-containing curing coating composition and the curing conditions were changed as described below. The obtained results are shown in Table 1.

(1) Preparation of Organic Substance-Containing Curing Coating Composition

To 20 parts of an A-B type acrylic block copolymer comprising a fluoroalkyl group as one component (Modiper F110 supplied by Nippon Yushi K.K., hydroxyl value = 36, solid content = 30%) were added 5.06 parts of a 15% by weight solution of Coronate EH (supplied by Nippon Polyurethane Kogyo K.K.) in methylisobutylketone/cyclohexanone (40/60 weight ratio) and 0.34 part of a 0.0001% by weight solution of dibutyltin dilaurate in methylisobutylketone/cyclohexanone (40/60 weight ratio), and the mixture was stirred to form a solution. Then, 1.2 parts of the solution was diluted with 135.2 parts of methylisobutylketone and 202.8 parts of cyclohexanone to form a coating composition.

## (2) Curing Method

Heat curing was carried out for 1 hour in a drier in which hot air maintained at 100 °C was circulated.

Table 1

Test Results

| | Contact Angle | Appearance | Anti-Reflection Effect | Stain Re-sistance | Surface Slip | Durability |
|---|---|---|---|---|---|---|
| Example 1 | 106.0 | good | 0.95 | good | o | good |
| Comparative Example 1 | 40.1 | good | 0.95 | bad | x | – |
| Comparative Example 3 | 58.8 | good | 1.57 | bad | x | – |
| Example 2 | 110.0 | good | 1.57 | good | o | good |

Examples 3 to 7

(1) Preparation of Coating Composition

A beaker was charged with 128.7 parts of γ-glycidoxypropylmethyldiethoxysilane, and 18.7 parts of a 0.05N aqueous solution of hydrochloric acid was added little by little while maintaining the liquid temperature at 10°C to effect hydrolysis. After completion of the dropwise addition, 69.3 parts of γ-chloropropyltrimethoxysilane was added to the reaction liquid, and 18.9 parts of a 0.01N aqueous solution of hydrochloric acid was added little by little to the reaction liquid while cooling the liquid to 10°C to form a hydrolyzed silane. After completion of the dropwise addition, 451.6 parts of a silica sol dispersed in methanol (solid content = 30%), 34.4 parts of diethylene glycol dimethyl ether, 263.8 parts of methyl alcohol, 1.5 parts of a silicone type surface active agent and 13.5 parts of aluminum acetylacetonate were added to the reaction liquid and the mixture was sufficiently stirred to form a coating composition.

(2) Preparation of Coated Lens

A lens formed of a polymer of diethylene glycol bisallyl carbonate was dipped in an aqueous solution of sodium hydroxide, washed sufficiently with water and dried. Then, both the surfaces of the lens were dip-coated with the coating composition prepared in (1) above at a pull-up speed of 10 cm/min and then heated and dried at 90°C for 4 hours to obtain a coated lens.

(3) Preparation of Anti-Reflection Film

On both the surfaces of the coated lens prepared in (2) above, $ZrO_2$-$TiO_2$-$Y_2O_3$ , $Ta_2O_5$ and $SiO_2$ were coated on the coating layer of the lens in this order by the vacuum deposition method so that the optical thickness was $\lambda/4$ ($\lambda$ = 540 nm).

The reflection interference color of the obtained anti-reflection plastic molded article was green, and the total ray transmission was 98.12%.

(4) Preparation of Organic Substance-Containing Curing Coating Composition

To 10 parts of Isoper E, which is a hydrocarbon solvent, was added 10 parts of dimethylpolysiloxane (having a number average molecular weight of 26,000) having a silanol group on both the ends to form a solution, and 1 part of ethyltriacetoxysilane and 0.05 part of dibutyltin diacetate were added to the solution and the mixture was allowed to stand still at room temperature a whole day and night. Then, components (B) and (C) shown in Table 2 were added to the mixture to form a coating composition.

(5) Coating and Curing

The surface of the anti-reflection film prepared in (3) above was dip-coated at a pull-up speed of 10 cm/min with the coating composition prepared in (4) above. The coated anti-reflection film was allowed to stand still at room temperature a whole day and night, whereby curing was effected and an anti-reflection article was obtained.

(6) Evaluation of Properties

The properties of the obtained article were evaluated according to the following methods. The obtained results are shown in Table 2.

(a) Appearance

The reflection interference color and its uniformity and opacity were examined with the naked eye.

(b) Stability of Coating Composition

The coating composition was allowed to stand still at room temperature a whole day and night, and the solution state was examined.

Table 2

| | Component (B) | | Component (C) | | Test Results | |
|---|---|---|---|---|---|---|
| | Kind | Amount (parts) | Kind | Amount (parts) | Appearance | Stability |
| Example 3 | MIBK | 540 | cyclohexanone | 540 | almost good | good |
| Example 4 | MIBK | 648 | cyclohexanone | 432 | good | good |
| Example 5 | MIBK | 864 | cyclohexanone | 216 | good in central portion | good |
| Example 6 | toluene | 648 | cyclohexanone | 432 | good | good |
| Example 7 | MIBK | 648 | dioxane | 432 | good in central portion | good |

Note

MIBK: methylisobutylketone

## Claims

1. An anti-reflection optical article, which comprises a substrate carrying, formed thereon, a single-layer or multi-layer anti-reflection film of which the outermost layer is silicon dioxide deposited by a physical vapor deposition method, and a coating of an organic substance-containing curing substance formed on the surface of the anti-reflection film, wherein the surface reflectance of the optical article is lower than 3% and the stationary contact angle to water is at least 60°.

2. An anti-reflection optical article as set forth in claim 1, wherein the organic substance-containing curing substance is an organic polysiloxane polymer.

3. An anti-reflection optical article as set forth in claim 1, wherein the organic substance-containing curing substance comprises a perfluoroalkyl group-containing compound.

4. An anti-reflection optical article as set forth in any preceding claim, wherein the thickness of the outermost organic substance-containing curing substance layer is 0.0005 to 0.5 $\mu$m.

5. An anti-reflection optical article as set forth in any preceding claim, which is an optical element.

6. An anti-reflection optical article as set forth in claim 5, wherein the optical element is a spectacle lens.

7. An anti-reflection optical article as set forth in any of claims 1 to 5, wherein the optical element is a CRT filter.

8. An anti-reflection optical article as set forth in any preceding claim, wherein a hard coat layer is interposed between the substrate and the anti-reflection film.

9. An anti-reflection optical article as set forth in claim 8, wherein the hard coat layer contains fine particles of silica having an average particle size of 1 to 200 nm.

10. An anti-reflection optical article as set forth in claim 8, wherein the hard coat layer comprises a silicon compound represented by the following general formula [II] and/or a hydrolysis product thereof:

$$R^1{}_aR^2{}_bSi(OR^3)4\text{-a-b} \qquad [II]$$

wherein $R^1$ and $R^2$ each stand for an alkyl group, an alkenyl group, an aryl group or a hydrocarbon group having a halogen group, an epoxy group, a glycidoxy group, an amino group, a mercapto group, a methacryloxy group or a cyano group, $R^3$ stands for an alkyl group having 1 to 8 carbon atoms, an alkoxyalkyl group, an acyl group or a phenyl group, and a and b are 0 or 1 and (a + b) is 1 or 2.

11. An anti-reflection optical article as set forth in claim 1, wherein the substrate is a plastic substrate and the surface film formed on the plastic substrate is a single-layer or multi-layer anti-reflection layer composed mainly of silicon dioxide.

12. An anti-reflection optical article as set forth in any preceding claim, wherein the substrate is a plastic substrate and the surface film formed on the plastic substrate is a single-layer or multi-layer anti-reflection film containing silica.

13. An anti-reflection optical article as set forth in any preceding claim, wherein an electroconductive layer is interposed between the substrate and the anti-reflection film.

14. A process for the preparation of anti-reflection optical articles, which comprises forming on the surface of a substrate an inorganic single-layer or multi-layer anti-reflection film, of which the outermost layer is silicon dioxide deposited by a physical vapor deposition method, coating a curable organic substance-containing substance consisting of a water-repellant liquid composition on the surface of the anti-reflection film, and curing the coating.

15. A process for the preparation of anti-reflection optical articles according to claim 14, wherein the curable organic substance-containing substance is a homogeneous solution comprising (A) a curable organic silicon compound, (B) a solvent capable of dissolving the organic silicon compound therein and (C) a solvent incapable of dissolving the organic silicon compound therein.

16. A process for the preparation of anti-reflection optical articles according to claim 15, wherein the content of the component (A) is 0.0001 to 5.0% by weight.

17. A process for the preparation of anti-reflection optical articles according to claim 15 or claim 16, wherein the component (B)/component (C) weight ratio is in the range of from 95/5 to 40/60.

**18.** A process for the preparation of anti-reflection optical articles according to any one of claims 15 to 17, wherein the curable organic silicon compound is an organic silicon compound having a terminal silanol group.

**19.** A process for the preparation of anti-reflection optical articles according to claim 18, wherein the organic silicon compound containing a terminal silanol group is a dimethylsiloxane type polymer.

**20.** A process for the preparation of anti-reflection optical articles according to any one of claims 14 to 19, wherein curing is effected by crosslinking reaction.

**21.** A process for the preparation of anti-reflection optical articles according to any one of claims 14 to 20, wherein curing is effected by heating.

**22.** A process for the preparation of anti-reflection optical articles according to any one of claims 14 to 21, wherein the curable organic substance-containing substance is coated by spin coating, dip coating, curtain flow coating or cast coating.

**Patentansprüche**

**1.** Ein optischer Gegenstand mit Anti-Reflexionseigenschaften, der einen Basiskörper, der einen darauf abgelagerten Ein- oder Mehrschichten-Film mit Anti-Reflexionseigenschaften trägt, bei dem die äußerste Schicht Siliciumdioxid ist, das mittels eines physikalischen Dampfdepositionsverfahrens aufgetragen worden ist, und auf der Oberfläche des Anti-Reflexionsfilms eine Beschichtung aus einer eine organische Substanz enthaltenden, aushärtenden Substanz aufweist, wobei der Oberflächen-Reflexionsgrad des optischen Gegenstands geringer als 3% ist und der stationäre Kontaktwinkel gegenüber Wasser mindestens 60° beträgt.

**2.** Ein optischer Gegenstand mit Anti-Reflexionseigenschaften gemäß Anspruch 1, bei dem die eine organische Substanz enthaltende, aushärtende Substanz ein organisches Polysiloxanpolymer ist.

**3.** Ein optischer Gegenstand mit Anti-Reflexionseigenschaften nach Anspruch 1, bei dem die eine organische Substanz enthaltende, aushärtende Substanz eine eine Perfluoroalkylgruppe enthaltende Verbindung ist.

**4.** Ein optischer Gegenstand mit Anti-Reflexionseigenschaften nach einem der vorhergehenden Ansprüche, bei dem die Dicke der äußersten Schicht aus der eine organische Substanz enthaltenden, aushärtenden Substanz 0,0005 bis 0,5 $\mu$m beträgt.

**5.** Ein optischer Gegenstand mit Anti-Reflexionseigenschaften nach einem der vorhergehenden Ansprüche, der ein optisches Element ist.

**6.** Ein optischer Gegenstand mit Anti-Reflexionseigenschaften nach Anspruch 5, wobei das optische Element ein Brillenglas ist.

**7.** Ein optischer Gegenstand mit Anti-Reflexionseigenschaften nach einem der Ansprüche 1 bis 5, wobei das optische Element ein CRT-Filter (Kathodenstrahlröhre-Filter) ist.

**8.** Ein optischer Gegenstand mit Anti-Reflexionseigenschaften nach einem der vorhergehenden Ansprüche, bei dem zwischen den Basiskörper und den Anti-Reflexionsfilm eine Hartbeschichtungsschicht zwischengelagert ist.

**9.** Ein optischer Gegenstand mit Anti-Reflexionseigenschaften nach Anspruch 8, bei dem die Hartbeschichtungsschicht feine Partikel einer Kieselverbindung mit einer durchschnittlichen Partikelgröße von 1 bis 200 nm enthält.

**10.** Ein optischer Gegenstand mit Anti-Reflexionseigenschaften nach Anspruch 8, bei dem die Hartbeschichtungsschicht eine Siliciumverbindung enthält, die repräsentiert ist durch die folgende allgemeine Formel (II) und/oder ein Hydrolyseprodukt derselben:

$$R^1_a R^2_b Si(OR^3)_{4-a-b} \qquad (II),$$

wobei $R^1$ und $R^2$ jeweils für eine Alkylgruppe, eine Alkenylgruppe, eine Arylgruppe oder eine Kohlenwasserstoffgruppe mit einer Halogengruppe, eine Epoxygruppe, eine Glycidoxygruppe, eine Aminogruppe, eine Mercaptogruppe, eine Methacryloxygruppe oder eine Cyanogruppe steht, während $R^3$ eine Alkylgruppe mit 1 bis 8 Kohlenstoffatomen, eine Alkoxyalkylgruppe, eine Acylgruppe oder eine Phenylgruppe bedeutet und a und b für 0 oder 1 stehen und (a + b) 1 oder 2 bedeuten.

11. Ein optischer Gegenstand mit Anti-Reflexionseigenschaften nach Anspruch 1, bei dem der Basiskörper ein Kunststoffkörper ist und der auf diesem Kunststoffkörper gebildete Oberflächenfilm ein Ein- oder Mehrschichten-Film mit Anti-Reflexionseigenschaften ist, der hauptsächlich aus Siliciumdioxid zusammengesetzt ist.

12. Ein optischer Gegenstand mit Anti-Reflexionseigenschaften nach einem der vorhergehenden Ansprüche, bei dem der Basiskörper ein Kunststoffkörper und der auf dem Kunststoffkörper gebildete Oberflächenfilm ein Einschichten- oder Mehrschichtenfilm mit Anti-Reflexionseigenschaften ist, der eine Kieselverbindung enthält.

13. Ein optischer Gegenstand nach einem der vorhergehenden Ansprüche, bei dem eine stromleitende Schicht zwischen dem Basiskörper und dem Anti-Reflexions-Film abgelagert ist.

14. Ein Verfahren zur Herstellung von optischen Gegenständen mit Anti-Reflexionseigenschaften, welches darin besteht, daß man auf der Oberfläche eines Basiskörpers einen anorganischen Einschichten- oder Mehrschichten-Film mit Anti-Reflexionseigenschaften ablagert, bei dem die äußerste Schicht Siliciumdioxid ist, das mittels eines physikalischen Dampfdepositionsverfahrens aufgetragen worden ist, wobei man auf der Oberfläche des Anti-Reflexionsfilmes eine aushärtbare, eine organische Substanz enthaltende Substanz ablagert, die aus einer wasserabstossenden, flüssigen Zusammensetzung besteht.

15. Ein Verfahren zur Herstellung von optischen Gegenständen mit Anti-Reflexionseigenschaften gemäß Anspruch 14, bei dem die aushärtbare, eine organische Substanz enthaltende Substanz eine homogene Lösung ist, enthaltend (A) eine aushärtbare, organische Siliciumverbindung, (B) ein Lösungsmittel, welches in der Lage ist, die darin enthaltene, organische Siliciumverbindung zu lösen, und (C) ein Lösungsmittel, welches nicht in der Lage ist, die darin enthaltene, organische Siliciumverbindung zu lösen.

16. Ein Verfahren zur Herstellung von optischen Gegenständen mit Anti-Reflexionseigenschaften gemäß Anspruch 15, wobei der Gehalt der Komponente (A) 0,0001 bis 5,0 Gew.-% beträgt.

17. Ein Verfahren zur Herstellung von optischen Gegenständen mit Anti-Reflexionseigenschaften nach Anspruch 15 oder 16, bei dem das Gewichtsverhältnis der Komponente (B) zur Komponente (C) im Bereich von 95/5 zu 40/60 liegt.

18. Ein Verfahren zur Herstellung von optischen Gegenständen mit Anti-Reflexionseigenschaften nach einem der Ansprüche 15 bis 17, bei dem die aushärtbare, organische Siliciumverbindung eine organische Siliciumverbindung mit einer endständigen Silanolgruppe ist.

19. Ein Verfahren zur Herstellung von optischen Gegenständen mit Anti-Reflexionseigenschaften nach Anspruch 18, bei dem die organische Siliciumverbindung, die eine endständige Silanolgruppe enthält, ein Polymer vom Dimethylsiloxantyp ist.

20. Ein Verfahren zur Herstellung von optischen Gegenständen mit Anti-Reflexionseigenschaften nach einem der Ansprüche 14 bis 19, bei dem das Aushärten mittels einer Quervernetzungsreaktion durchgeführt wird.

21. Ein Verfahren zur Herstellung von optischen Gegenständen mit Anti-Reflexionseigenschaften nach einem der Ansprüche 14 bis 20, bei dem das Aushärten durch Erwärmen erfolgt.

**22.** Ein Verfahren zur Herstellung von optischen Gegenständen mit Anti-Reflexionseigenschaften nach einem der Ansprüche 14 bis 21, bei dem die aushärtbare, eine organische Substanz enthaltende Substanz aufgetragen wird durch Schleuderbeschichtung, Tauchbeschichtung, Streichbeschichtung oder Spritzbeschichtung.

**Revendications**

1. Objet optique antireflet qui comprend un substrat portant, formée sur lui, une couche antireflet à couche unique ou à couches multiples dont la couche la plus extérieure est du dioxyde de silicium déposé par un procédé physique de dépôt de vapeur, et un revêtement d'une substance de durcissement contenant une substance organique formé sur la surface de la couche antireflet, dans lequel le coefficient de réflexion de l'objet optique est inférieur à 3 % et l'angle de contact stationnaire avec l'eau est d'au moins 60°.

2. Objet optique antireflet selon la revendication 1, dans lequel la substance de durcissement contenant une substance organique est un polymère organique de polysiloxane.

3. Objet optique antireflet selon la revendication 1, dans lequel la substance de durcissement contenant une substance organique comprend un composé contenant un groupe perfluoroalkyle.

4. Objet optique antireflet selon l'une quelconque des revendications précédentes, dans lequel l'épaisseur de la couche extérieure de substance de durcissement contenant une substance organique est comprise entre 0,0005 et 0,5 $\mu$m.

5. Objet optique antireflet selon l'une quelconque des revendications précédentes, qui est un composant optique.

6. Objet optique antireflet selon la revendication 5, dans lequel le composant optique est un verre de lunettes.

7. Objet optique antireflet selon l'une quelconque des revendications 1 à 5, dans lequel le composant optique est un filtre de tube à rayons cathodiques.

8. Objet optique antireflet selon l'une quelconque des revendications précédentes, dans lequel une couche de revêtement dur est interposée entre le substrat et la couche antireflet.

9. Objet optique antireflet selon la revendication 8, dans lequel la couche de revêtement dur contient des particules fines de silice ayant une dimension moyenne de particule de 1 à 200 nm.

10. Objet optique antireflet selon la revendication 8, dans lequel la couche de revêtement dur comprend un composé de silicium représenté par la formule générale suivante (II) et/ou un produit de son hydrolyse :

$$R^1{}_a R^2{}_b Si(OR^3)_{4-a-b} \qquad (II)$$

dans laquelle $R^1$ et $R^2$ représentent chacun un groupe alkyle, un groupe alkényle, un groupe aryle ou un groupe hydrocarbure ayant un groupe halogène, un groupe époxy, un groupe glycidoxy, un groupe amino, un groupe mercapto, un groupe méthacryloxy ou un groupe cyano, $R^3$ représente un groupe alkyle ayant 1 à 8 atomes de carbone, un groupe alkoxyalkyle, un groupe acyle ou un groupe phényle, et a et b sont 0 ou 1 et (a + b) est égal à 1 ou 2.

11. Objet optique antireflet selon la revendication 1, dans lequel le substrat est un substrat plastique et la couche superficielle formée sur le substrat plastique est une couche antireflet à couche unique ou à couches multiples composée principalement de dioxyde de silicium.

12. Objet optique antireflet selon l'une quelconque des revendications précédentes, dans lequel le substrat est un substrat plastique et la couche superficielle formée sur le substrat plastique est une couche antireflet à couche unique ou à couches multiples contenant de la silice.

**13.** Objet optique antireflet selon l'une quelconque des revendications précédentes, dans lequel une couche électroconductrice est interposée entre le substrat et la couche antireflet.

**14.** Procédé pour la préparation d'objets optiques antireflet qui comprend la formation sur la surface d'un substrat d'une couche inorganique antireflet à couche unique ou à couches multiples dont la couche extérieure est du dioxyde de silicium déposé par un procédé physique de dépôt de vapeur, le revêtement avec une substance contenant une substance organique durcissable consistant en une composition liquide hydrophobe sur la surface de la couche antireflet, et le durcissement du revêtement.

**15.** Procédé pour la préparation d'objets optiques antireflet selon la revendication 14, dans lequel la substance contenant une substance organique durcissable est une solution homogène comprenant (A) un composé organique durcissable de silicium, (B) un solvant apte à y dissoudre le composé organique de silicium et (C) un solvant inapte à y dissoudre le composé organique de silicium.

**16.** Procédé pour la préparation d'objets optiques antireflet selon la revendication 15, dans lequel la teneur en composant (A) est de 0,0001 à 5 % en poids.

**17.** Procédé pour la préparation d'objets optiques antireflet selon la revendication 15 ou 16, dans lequel le rapport en poids du composant (B) au composant (C) est dans la gamme de 95/5 à 40/60.

**18.** Procédé pour la préparation d'objets optiques antireflet selon l'une quelconque des revendications 15 à 17, dans lequel le composé organique durcissable de silicium est un composé organique de silicium ayant un groupe silanol à une extrémité de chaîne.

**19.** Procédé pour la préparation d'objets optiques antireflet selon la revendication 18, dans lequel le composé organique de silicium contenant un groupe silanol en extrémité est un polymère de type diméthylsiloxane.

**20.** Procédé pour la préparation d'objets optiques antireflet selon l'une quelconque des revendications 14 à 19, dans lequel le durcissement est effectuée par une réaction de réticulation.

**21.** Procédé pour la préparation d'objets optiques antireflet selon l'une quelconque des revendications 14 à 20, dans lequel le durcissement est effectuée par chauffage.

**22.** Procédé pour la préparation d'objets optiques antireflet selon l'une quelconque des revendications 14 à 21, dans lequel la substance contenant une substance organique polymérisable est déposée en revêtement à la tournette, en revêtement au trempé, en revêtement au rideau, ou en revêtement au jet.